# EUROPÄISCHE PATENTANMELDUNG

(11) **EP 4 119 332 A1**
(43) Veröffentlichungstag der Anmeldung: **18.01.2023**
(21) Anmeldenummer: 21184987.2
(22) Anmeldetag: 12.07.2021
(51) Int. Cl.: B29C 64/245, B29C 64/129, B29C 64/393, B33Y 30/00, B33Y 10/00, B33Y 50/02

(54) **SCHWENKBARE BAUPLATTFORM ZUR ERZEUGUNG EINER PARALLELEN BAUEBENE**

(71) Anmelder: DENTSPLY SIRONA Inc., York, PA 17401 (US); Sirona Dental Systems GmbH, 64625 Bensheim (DE)
(72) Erfinder: Schäfer, Thomas, 64625 Bensheim (DE); Stahl, Christian, 64625 Bensheim (DE); Schmidt, Christian, 64625 Bensheim (DE); Fornoff, Peter, 64625 Bensheim (DE)
(74) Vertreter: Özer, Alpdeniz

(57) **Zusammenfassung**

Die vorliegende Erfindung betrifft einen 3D Drucker (1) umfassend, eine Wanne (1.1) mit einem mindestens teilweise transparenten Boden (1.2) zur Aufnahme vom flüssigem photoreaktiven Harz (1.3) zur Herstellung eines festen Bauteils; eine Bauplattform (2.1) zum schichtweisen Herausziehen des Bauteils aus der Wanne (1.1); einen Projektor (1.4) zum Projizieren der Schichtgeometrie auf den transparenten Boden (1.2); einen Transportapparat (1.5) zum Abwärts- und Aufwärtsbewegen der Bauplattform (2.1) in der Wanne (1.1); und einen Aufnahmeapparat (2) zum ablösbaren Verbinden der Bauplattform (2.1) an den Transportapparat (1.5); gekennzeichnet dadurch dass der Aufnahmeapparat (2) eine Schwenkvorrichtung (2.2) zum schwenkbaren Halten der Bauplattform (2.1) aufweist und darauf ausgelegt ist beim Absenken durch den Transportapparats(1.5) die Unterseite der Bauplattform (2.1) an den transparenten Boden (1.2) der Wanne (1.1) parallel anzulegen.

## Beschreibung

### TECHNISCHES GEBIET DER ERFINDUNG

Die vorliegende Erfindung bezieht sich auf 3D Drucker, insbesondere auf den Bauträger bzw. die Bauplattform eines 3D Druckers.

### HINTERGRUND DER ERFINDUNG

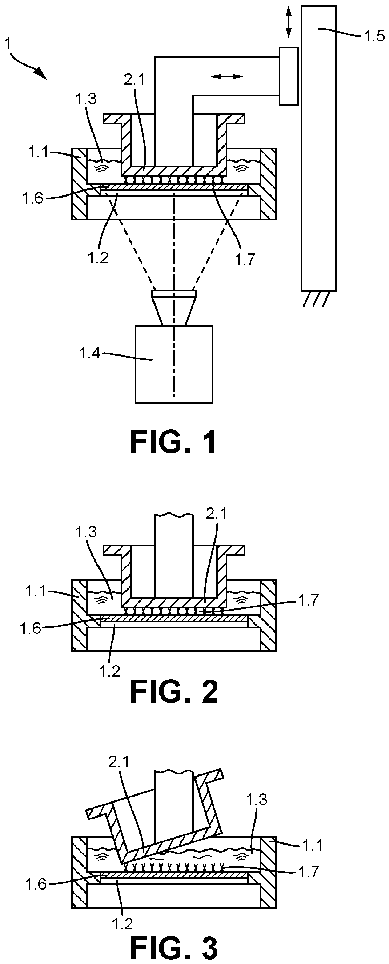

Beim 3D Druck im DLP Verfahren werden photoreaktive Harze mit Licht (i.d.R. UV-Licht) schichtweise ausgehärtet. Im sogenannten Bottom-Up Verfahren befindet sich ein Projektor unterhalb des Harzbades (s.Abb. 1). Das Harzbad befindet sich in einer Wanne, die einen transparenten Boden, typischerweise eine Folie hat, auf dem die Schichtgeometrie projiziert wird. Nachdem eine Schicht ausgehärtet wurde, fährt die Bauplattform nach oben, um einen Spalt für die nächste auszuhärtende Schicht zu bilden. Dabei wird die ausgehärtete Schicht von dem Wannenboden abgeschält. Zu Beginn eines Baujobs muss die erste Schicht an die Bauplattform so angebunden werden, dass trotz der Abschälkräfte eine sichere Haftung auf der Bauplattform gewährleistet wird. Da die Aushärtetiefe prozessbedingt begrenzt ist, müssen die Projektionsebene auf dem transparenten Boden und die Untersite der Bauplattform eine hohe Parallelität aufweisen. Sind die beiden Ebenen nicht ausreichend parallel, ist keine vollständige Anhaftung des Baujobs an die Bauplattform gewährleistet und der Job kann nicht ausgeführt werden.

Die Parallelität kann z.B. durch ein Einstellen der Bauplattform vor jedem Job erzielt werden. Ohne ein Eingreifen vor jedem Job hängt die Parallelität u.a. durch die Toleranzen der Bauplattform und des Wannenbodens ab. Die Bauplattform und die Wanne werden typischerweise auf mehreren 3D Druckern gleichen Typs verwendet. D.h. beim Wechsel auf einen anderen Printer müssen diese vor einem Druckjob erneut aufeinander ausgerichtet werden.

### OFFENBARUNG DER ERFINDUNG

Ein Ziel der vorliegenden Erfindung ist die Bereitstellung eines 3D Druckers, bei dem die die Parallelität zwischen der Projektionsebene und Bauplattformebene ohne Justierung hergestellt werden kann. Somit kann auf enge Bauteiltoleranzen bzgl. der Parallelität bzw. auf einen separaten Einstellvorgang der Bauplattform vor jedem Job verzichtet werden. Ein weiteres Ziel der vorliegenden Erfindung ist die Bereitstellung eines 3D Druckers, bei dem durch Prozessführung nach den ersten Schichten eine parallele Ebene erzeugt werden kann.

Diese Ziele werden durch den 3D Drucker nach Anspruch 1, und das Steuerungsverfahren nach Anspruch 6 erreicht. Die Gegenstände der abhängigen Ansprüche beziehen sich auf Weiterentwicklungen und bevorzugte Ausführungsformen.

Der erfindungsgemäße 3D Drucker umfasst eine Wanne mit einem mindestens teilweise transparenten Boden zur Aufnahme von flüssigem photoreaktiven Harz zur Herstellung eines festen Bauteils; eine Bauplattform zum schichtweisen Herausziehen des Bauteils aus der Wanne; einen Projektor zum Projizieren der Schichtgeometrie auf den transparenten Boden; einen Transportapparat zum Abwärts- und Aufwärtsbewegen der Bauplattform in der Wanne und einen Aufnahmeapparat zum ablösbaren Verbinden der Bauplattform an den Transportapparat. Der erfindungsgemäße Aufnahmeapparat weist eine Schwenkvorrichtung zum schwenkbaren Halten der Bauplattform auf und ist darauf ausgelegt beim Absenken durch den Transportapparats die Unterseite der Bauplattform an den transparenten Boden der Wanne parallel anzulegen.

Das wesentliche Merkmal der Erfindung liegt darin, dass durch die bewegliche, insbesondere schwenkbare Lagerung der Bauplattform und durch die Prozessführung nach den ersten Schichten eine parallele Ebene erzeugt wird.

Nach dem erfindungsgemäßen Verfahren zur Steuerung eines 3D Druckers wird die Bauplattform vorzugsweise kraftgesteuert abgesenkt, bis sie sich parallel auf die Projektionsebene legt; anschließend wird die Bauplattform nach oben gefahren und eine Schichtdicke höher zugestellt; die Projektion erfolgt nun vorzugsweise vollflächig auf maximalen projizierbaren Fläche; bei einem nicht parallelen Spalt unterhalb der Bauplattform härtet das Harz nur dort aus, wo es sich im Spalt befindet; nach mehrfachem Wiederholen des Ablösens und wieder Zustellens bildet sich unter der Bauplattform ein Keil, dessen Unterseite eine parallele Ebene zur Projektionsebene darstellt.

Eine vorteilhafte Wirkung der Erfindung ist, dass auf enge Toleranzen bei der Parallelität der Bauplattform zur Projektionsebene oder auf einen separaten Einstellvorgang vor jedem Job verzichtet werden kann.

In einer bevorzugten Ausführungsform umfasst der 3D Drucker vorzugsweise eine Kraftmessungsvorrichtung zum kraftgesteuerten Absenken und Herausziehen der Bauplattform.

In einer bevorzugten Ausführungsform weist die Schwenkvorrichtung ein Drehgelenk zum Halten der Bauplattform auf. Das Drehgelenk ist vorzugsweise ein Kugelgelenk. Alternativ können andere, dem Fachmann bekannten Gelenkverbindungen, die eine schwenkbare Bewegung ermöglichen, benutzt werden. Neben einer expliziten Gelenkverbindung ist auch eine flexible Aufnahme der Bauplattform durch Elastomer Elemente oder federartige Elemente möglich.

In einer bevorzugten Ausführungsform ist die Bauplattform innerhalb des Aufnahmeapparats vorzugsweise federnd gelagert.

In einer bevorzugten Ausführungsform wird der Aufnahmeapparat als eine eigenständige Einheit bereitgestellt, der dem Kunden separat zur Nachrüstung eines bestehenden 3D Druckers zur Verfügung gestellt wird. Der Aufnahmeapparat hat eine Verbindungsvorrichtung, vorzugsweise einen Aufnahmearm, der mit dem Transportapparat ablösbar verbunden werden kann. Die Verbindung kann eine formschlüssige und/oder kraftschlüssige Verbindung sein wie. z.B. eine Steckverbindung, Schraubverbindung usw.

In einer bevorzugten Ausführungsform ist der Projektor auch einstellbar so dass die Fokalfläche höhenverstellbar sowie in der horizontalen Längs- und Querrichtungen des transparenten Bodens der Wanne drehbar verstellbar ist, um eine Justierung an die Projektionsebene auf dem transparenten Boden der Wanne zu ermöglichen.

### KURZBESCHREIBUNG DER ZEICHNUNGEN

In der nachfolgenden Beschreibung wird die vorliegende Erfindung anhand von Ausführungsbeispielen unter Bezugnahme auf die Zeichnungen näher erläutert, wobei
Abb.1 - zeigt eine schematische Teilansicht eines idealen 3D Druckers nach dem Stand der Technik;
Abb.2 - zeigt eine schematische Teilansicht des 3D Druckers aus Abb. 1 zu Beginn eines Baujobs;
Abb.3 - zeigt eine schematische Teilansicht eines *nicht* idealen 3D Druckers nach dem Stand der Technik bei dem die Projektionsebene und Bauplattformebene *keine* ausreichende Parallelität aufweisen;
Abb.4 - zeigt eine schematische Teilansicht eines 3D Druckers nach einer Ausführungsform der Erfindung;
Abb.5 - zeigt eine schematische Teilansicht des 3D Druckers aus Abb.4 zu Beginn eines Baujobs, wobei durch das Absenken sich die Unterseite der Bauplattform an die Projektionsebene angeglichen hat;
Abb.6 - zeigt eine schematische Teilansicht des 3D Druckers aus Abb.4 beim Belichten bzw. Aushärten der ersten Schichten, so dass ein Keil ausgehärtet wird;
Abb.7 - zeigt eine schematische Teilansicht des 3D Druckers aus Abb.4 beim Belichten bzw. Aushärten, wobei der Keil gewachsen ist bis die Parallelität von der aktuellen Bauebene und der Projektionsebene erreicht wurde.

Die in den Zeichnungen gezeigten Referenznummern bezeichnen die unten aufgeführten Elemente, auf die in der nachfolgenden Beschreibung der beispielhaften Ausführungsformen Bezug genommen wird.
- 1: 3D Drucker
- 1.1: Wanne
- 1.2: Transparenter Boden
- 1.3: Photoreaktives Harz
- 1.4: Projektor
- 1.5: Transportapparat
- 1.6: Folie
- 1.7: Schicht
- 1.8: Keil
- 2: Aufnahmeapparat
- 2.1: Bauplattform
- 2.2: Schwenkvorrichtung
- 2.21: Aufnahmearm
- 2.22: Drehgelenk
- 2.221: Feder
- 2.222: Pin
- 2.223: Loch

Als Vergleichsbeispiel wird in Abb.1 eine schematische Teilansicht eines *idealen* 3D Druckers nach dem Stand der Technik gezeigt. Beim 3D Druck im DLP Verfahren werden photoreaktive Harze (1.3) mit Licht (i.d.R. UV-Licht) schichtweise ausgehärtet. Im sogenannten Bottom-Up Verfahren befindet sich ein Projektor (1.4) unterhalb der Wanne (1.1) bzw. des Harzbades. Das Harzbad befindet sich in der Wanne (1.1), die einen transparenten Boden (1.2), vorzugsweise eine Folie (1.6), hat, auf den die Schichtgeometrie projiziert wird. Nachdem eine Schicht (1.7) ausgehärtet wurde, wird die Bauplattform (2.1) durch den Transportapparat (1.5) nach oben gefahren, um einen Spalt für die nächste auszuhärtende Schicht zu bilden. Zu Beginn eines Baujobs muss die erste Schicht (1.7) an die Bauplattform (2.1) angebunden werden (s. Abb. 2). Da die Aushärtetiefe prozessbedingt begrenzt ist, müssen Projektionsebene und Bauplattformebene eine hohe Parallelität aufweisen. Sind die beiden Ebenen nicht parallel, ist keine vollständige Anhaftung des Baujobs an die Bauplattform (2.1) gewährleistet und der Job kann nicht ausgeführt werden (s. Abb. 3).

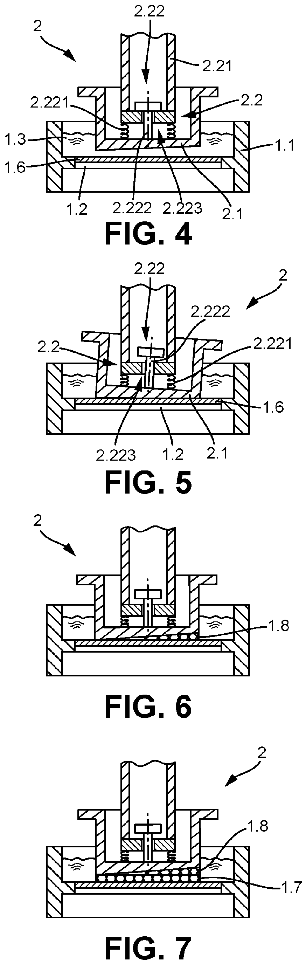

In Abb.4 wird eine schematische Teilansicht eines 3D Druckers nach einer Ausführungsform der Erfindung gezeigt. Der erfindungsgemäße 3D Drucker umfasst eine Wanne (1.1) mit einem mindestens teilweise transparenten Boden (1.2) zur Aufnahme vom flüssigen photoreaktiven Harz (1.3) zur Herstellung eines festen Bauteils; eine Bauplattform (2.1) zum schichtweisen Herausziehen des Bauteils aus der Wanne; einen Projektor (1.4) zum Projizieren der Schichtgeometrie auf den transparenten Boden (1.2); einen Transportapparat (1.5) zum Abwärts- und Aufwärtsbewegen der Bauplattform (2.1) in der Wanne (1.1); und einen Aufnahmeapparat (2) zum ablösbaren Verbinden der Bauplattform (2.1) an den Transportapparat (1.5). Anders als das Vergleichsbeispiel in Abb.1, weist der erfindungsgemäße Aufnahmeapparat (2) eine Schwenkvorrichtung (2.2) zum schwenkbaren Halten der Bauplattform (2.1) auf, und ist angepasst beim Absenken durch den Transportapparats (1.5) die Unterseite der Bauplattform (2.1) an den transparenten Boden (1.2) der Wanne (1.1) parallel anzulegen.

In einer bevorzugten Ausführungsform weist der 3D Drucker (1) eine Kraftmessungsvorrichtung (nicht gezeigt) zum kraftgesteuerten Absenken und Herausziehen der Bauplattform (2.1) auf.

Gemäß der Erfindung ist der Aufnahmeapparat (2) eine eigenständige Einheit, die separat vom 3D Drucker (1) den Kunden zur Nachrüstung bereitgestellt werden kann. Der Aufnahmeapparat (2) umfasst die Bauplattform (2.1) sowie die Schwenkvorrichtung (2.2) zum schwenkbaren Halten der Bauplattform (2.1). Der Aufnahmeapparat (2) ist geeignet zur Verwendung mit dem 3D Drucker (1) und zum ablösbaren Verbinden der Bauplattform (2.1) an den Transportapparats (1.5) des 3D Druckers (1).

In einer weiteren bevorzugten Ausführungsform des Aufnahmeapparats (2), weist die Schwenkvorrichtung (2.2) ein Drehgelenk (2.22) zum Halten der Bauplattform (2.1) und einen Aufnahmearm (2.21) an dem das Drehgelenk (2.22) verbunden ist auf. In einer weiteren bevorzugten Ausführungsform ist das Drehgelenk (2.22) ein universales Kugelgelenk (nicht gezeigt). In einer weiteren bevorzugten alternative Ausführungsform ist die Bauplattform (2.1) über einen Pin (2.222) in ein Loch (2.223) des Aufnahmearms (2.21) gelagert, wobei das Loch (2.223) ausreichend Spielraum für die Schwenkbewegung erlaubt.

In einer weiteren bevorzugten Ausführungsform ist die Bauplattform (2.1) im Aufnahmeapparat (2) vorzugsweise federnd eingerichtet. Vorzugsweise sind ein oder mehrere Federn (2.221) zwischen den Aufnahmearm (2.21) und der Bauplattform (2.1) angeordnet.

Im der nachfolgenden Beschreibung wird die Funktionsweise des 3D Druckers (1) nach einer Ausführungsform detaillierter erklärt.

In der dargestellten Ausführungsform (s. Abb. 4) ist die Bauplattform (4.1) beweglich, insbesondere *schwenkbar*, mit dem Aufnahmearm (4.2) verbunden. Durch die Federn (2.221) (oder auch durch Gewichtskraft) wird sie dabei in eine definierte Position gebracht. Beim Absenken gleicht sich die Unterseite der Bauplattform (2.1) an die Projektionsebene an (s. Abb. 5). Beim Belichten bzw. Aushärten der ersten Schichten (1.7) wird bei zuvor unparallelen Flächen von Bauplattform (2.1) und Projektionsebene zunächst eine Seite oder eine Ecke der Bauplattform (2.1) zuerst abheben. Dadurch wird ein Keil (1.8) ausgehärtet (s. Abb. 6). Der Keil (1.8) wächst so lange, bis die Parallelität von der aktuellen Bauebene und der Projektionsebene erreicht ist (s. Abb. 7). Ab diesem Zeitpunkt kann von einer Anbindung auf der gesamten Baufläche ausgegangen werden.

Die Erfindung stellt auch ein Verfahren zur Steuerung des 3D Druckers (1) bereit. Nach diesem Steuerungsverfahren wird die Bauplattform (2.1) vorzugsweise kraftgesteuert abgesenkt, bis sie sich parallel auf die Projektionsebene legt; anschließend wird die Bauplattform (2.1) nach oben gefahren und eine Schichtdicke höher zugestellt; die Projektion erfolgt nun vorzugsweise vollflächig auf maximalen projizierbaren Fläche; bei einem nicht parallelen Spalt unterhalb der Bauplattform (2.1) härtet das Harz (1.3) nur dort aus, wo es sich im Spalt befindet; nach mehrfachem Wiederholen des Ablösens und wieder Zustellens bildet sich unter der Bauplattform (2.1) ein Keil (1.8), dessen Unterseite eine parallele Ebene zur Projektionsebene darstellt. Die Anzahl der mehrfachen Wiederholungen bevor das hauptsächliche 3D Druckverfahren des Bauteil beginnt kann auf eine empirische vordefinierte Zahl festgelegt werden. Alternativ können Kraftsensoren in der Kraftmessungsvorrichtung bzw. ein oder mehrere optische Sensoren zum Einsatzkommen, um den Verlauf der Schwenkbewegung zu beobachten. Der Transportapparat (1.5) kann die Bauplattform (2.1) senkrecht sowohl als auch horizontal innerhalb der Wanne (1.1) bewegen.

## Patentansprüche

1. 3D Drucker (1) umfassend,
eine Wanne (1.1) mit einem mindestens teilweise transparenten Boden (1.2) zur Aufnahme vom flüssigem photoreaktiven Harz (1.3) zur Herstellung eines festen Bauteils;
eine Bauplattform (2.1) zum schichtweisen Herausziehen des Bauteils aus der Wanne (1.1);
einen Projektor (1.4) zum Projizieren der Schichtgeometrie auf den transparenten Boden (1.2);
einen Transportapparat (1.5) zum mindestens Abwärts- und Aufwärtsbewegen der Bauplattform (2.1) in der Wanne (1.1); und
einen Aufnahmeapparat (2) zum ablösbaren Verbinden der Bauplattform (2.1) an den Transportapparat (1.5);
**gekennzeichnet dadurch dass**
der Aufnahmeapparat (2) eine Schwenkvorrichtung (2.2) zum schwenkbaren Halten der Bauplattform (2.1) aufweist und eingerichtet ist beim Absenken durch den Transportapparats (1.5) die Unterseite der Bauplattform (2.1) an den transparenten Boden (1.2) der Wanne (1.1) parallel anzulegen.

2. 3D Drucker (1) nach Anspruch 1, **gekennzeichnet dadurch, dass** dieser eine Kraftmessungsvorrichtung aufweist zum kraftgesteuerten Absenken und Herausziehen der Bauplattform (2.1).

3. Aufnahmeapparat (2) umfassend eine Bauplattform (2.1) zur Verwendung mit einem 3D Drucker nach Anspruch 1, zum ablösbaren Verbinden der Bauplattform (2.1) an den Transportapparat (1.5) des 3D Druckers (1), **gekennzeichnet dadurch dass** der Aufnahmeapparat (2) ferner eine Schwenkvorrichtung (2.2) zum schwenkbaren Halten der Bauplattform (2.1) aufweist und eingerichtet ist beim Absenken durch den Transportapparat (1.5) die Unterseite der Bauplattform (2.1) an den transparenten Boden (1.2) der Wanne (1.1) parallel anzulegen.

4. Aufnahmeapparat (2) nach Anspruch 1, **gekennzeichnet dadurch, dass** die Schwenkvorrichtung (2.2) ein Drehgelenk (2.22) zum Halten der Bauplattform (2.1) und einen Aufnahmearm (2.21), an dem das Drehgelenk (2.22) verbunden ist, aufweist.

5. Aufnahmeapparat (2) nach einem der Ansprüche 3 bis 4, **gekennzeichnet dadurch, dass** die Bauplattform (2.1) im Aufnahmeapparat (2) federnd gelagert ist.

6. Verfahren zur Steuerung eines 3D Drucker (1) nach einem der vorangegangen Ansprüche 1 bis 5, **gekennzeichnet dadurch, dass**
die Bauplattform (2.1) vorzugsweise kraftgesteuert abgesenkt wird, bis die Unterseite der Bauplattform (2.1) an den transparenten Boden (1.2) der Wanne (1.1) parallel anliegt;
anschließend wird die Bauplattform (2.1) nach oben gefahren und eine Schichtdicke höher zugestellt;
die Projektion erfolgt nun vollflächig auf maximalen projizierbaren Fläche, so dass bei einem nicht parallelen Spalt unterhalb der Bauplattform das Harz (1.3) nur dort aus härtet, wo es sich im Spalt befindet;
nach mehrfachem Wiederholen des Ablösens und wieder Zustellens bildet sich unter der Bauplattform (2.1) ein Keil (1.8), dessen Unterseite eine parallele Ebene zum transparenten Boden (1.2) der Wanne (1.1) darstellt.
